# EUROPÄISCHE PATENTSCHRIFT

(11) **EP 3 588 732 B1**
(45) Veröffentlichungstag und Bekanntmachung des Hinweises auf die Patenterteilung: **23.12.2020**
(21) Anmeldenummer: 19180752.8
(22) Anmeldetag: 18.06.2019
(51) Int. Cl.: H02J 7/00, A47L 11/00, A47L 9/00, H02J 11/00, A47L 5/30, A47L 9/04, A47L 9/28, H02J 3/14

(54) **BODENBEARBEITUNGSGERÄT MIT EINEM BASISGERÄT UND EINEM LÖSBAR MIT DEM BASISGERÄT VERBINDBAREN VORSATZGERÄT**
FLOOR TREATMENT DEVICE WITH A BASE AND AN ATTACHMENT DETACHABLY CONNECTED TO THE BASE
APPAREIL DE TRAITEMENT DU SOL DOTÉ D'UN APPAREIL DE BASE ET D'UN APPAREIL ACCESSOIRE RACCORDABLE DE MANIÈRE AMOVIBLE À L'APPAREIL DE BASE

(30) Priorität: 28.06.2018 DE 102018115669
(43) Veröffentlichungstag der Anmeldung: 01.01.2020
(73) Patentinhaber: Vorwerk & Co. Interholding GmbH, 42275 Wuppertal (DE)
(72) Erfinder: Cornelißen, Markus, 53332 Bornheim (DE)
(74) Vertreter: Müller, Enno

(56) Entgegenhaltungen:
- EP-A1- 1 764 020
- WO-A2-2004/032696
- DE-A1-102010 000 573

## Beschreibung

### Gebiet der Technik

Die Erfindung betrifft ein Bodenbearbeitungsgerät mit einem Basisgerät und einem lösbar mit dem Basisgerät verbindbaren Vorsatzgerät, wobei das Basisgerät mindestens einen ersten elektrischen Verbraucher und das Vorsatzgerät mindestens einen zweiten elektrischen Verbraucher aufweist, wobei das Bodenbearbeitungsgerät des Weiteren einen Akkumulator zur Energieversorgung der elektrischen Verbraucher und eine Schutzelektronik aufweist, welche eine durch die Betriebsgrenzen des Akkumulators bestimmte maximale Leistungsabgabe des Akkumulators definiert, welche beim Überschreiten zum Abschalten des Vorsatzgerätes oder Bodenbearbeitungsgerätes führen würde, wobei das Bodenbearbeitungsgerät eine Steuereinrichtung zum Ermitteln und zum Steuern einer für seinen momentanen Betrieb benötigte Leistungsaufnahme des ersten Verbrauchers des Basisgerätes und einer für seinen momentanen Betrieb benötigte Leistungsaufnahme des zweiten Verbrauchers des Vorsatzgerätes aufweist.

### Stand der Technik

Bodenbearbeitungsgeräte der vorgenannten Art sind im Stand der Technik in einer Vielzahl von unterschiedlichen Ausführungsvarianten bekannt. Diese können beispielsweise ein Basisgerät aufweisen, an welches eine Vielzahl von unterschiedlichen Vorsatzgeräten anschließbar ist. Bei den Vorsatzgeräten kann es sich beispielsweise um Bodendüsen zur Reinigung von Hartböden oder Teppichböden, Wischelemente, Elektrobürsten, Poliergeräte oder ähnliches handeln. Das Basisgerät kann beispielsweise eine Motor-Gebläse-Einheit aufweisen, mittels welcher Staub und Schmutz von einer zu reinigenden Bodenfläche über das Vorsatzgerät in einen Staubsammelbehälter des Basisgerätes eingesaugt werden kann. Das Bodenbearbeitungsgerät kann des Weiteren entweder ausschließlich durch einen Akkumulator mit Energie versorgt werden, oder nach Wahl zusätzlich über ein Elektrokabel.

Der Akkumulator des Bodenbearbeitungsgerätes wird verwendet, um elektrische Verbraucher des Basisgerätes und des Vorsatzgerätes mit Energie zu versorgen. Je nach der Menge der während des Arbeitsbetriebs benötigten Energie kann es vorkommen, dass eine maximale Leistungsabgabe des Akkumulators überschritten wird und die Schutzelektronik des Bodenbearbeitungsgerätes einen elektrischen Verbraucher oder das ganze Bodenbearbeitungsgerät ausschaltet. Für den Akkumulator ist eine maximale Leistungsabgabe definiert, die nicht überschritten werden darf, da der Akkumulator ansonsten Schaden nehmen könnte. Wenn die Schutzelektronik eine Leistungsabgabe des Akkumulators feststellt, die die maximale Leistungsabgabe überschreitet, so wird der Stromfluss aus dem Akkumulator zu den Verbrauchern reduziert. In diesem Fall wird beispielsweise ein bestimmter elektrischer Verbraucher oder gar das ganze Bodenbearbeitungsgerät unverzüglich abgeschaltet, so dass ein Nutzer das Bodenbearbeitungsgerät wieder einschalten muss und dann erst die Bodenbearbeitungstätigkeit fortsetzen kann, wenn die maximale Leistungsabgabe des Akkumulators wieder unterschritten ist.

Insbesondere kann die maximale Leistungsabgabe des Akkumulators dann überschritten werden, wenn die Summe der einzelnen Leistungsaufnahmen der Verbraucher, des Vorsatzgerätes und des Basisgerätes dementsprechend groß sind. Die im Stand der Technik bekannten Bodenbearbeitungsgeräte weisen Basisgeräte und Vorsatzgeräte mit jeweils einer eigenen Schutzelektronik auf, die jeweils eine definierte Abschaltschwelle aufweisen. Da die maximale Leistungsaufnahme aller Verbraucher des Vorsatzgerätes und des Basisgerätes die maximale Leistungsabgabe des Akkumulators des Bodenbearbeitungsgerätes übersteigen würde, ist beispielsweise für die Schutzelektronik des Vorsatzgerätes eine Abschaltschwelle definiert, die sich an einer maximalen Leistungsaufnahme der Verbraucher des Basisgerätes orientiert. Dies verhindert, dass der Akkumulator Schaden nimmt, wenn bspw. alle Verbraucher des Basisgerätes eine maximale Leistungsaufnahme zeigen. Aufgrund der separaten Abschaltelektroniken von Basisgerät und Vorsatzgerät ist die Abschaltschwelle der Schutzelektronik des Vorsatzgerätes daher zumeist sehr niedrig festgelegt, obwohl die Verbraucher des Basisgerätes oftmals keine maximale Leistungsaufnahme beziehen oder wenn, dann nur kurzzeitig beim Hochfahren eines Verbrauchers. Es ist daher möglich, dass ein Verbraucher des Vorsatzgerätes bzw. das Vorsatzgerät insgesamt unnötig abgeschaltet wird, obwohl der Ackumulator noch nicht mit maximaler Leistungsabgabe arbeitet.

Daneben existieren im Stand der Technik Lösungen bei welchen eine Leistung eines Verbrauchers auf eine definierte Standardleistung eingestellt oder um einen bestimmten Betrag geändert wird, wenn Leistung durch einen anderen Verbraucher benötigt wird. Diesbezüglich sei auf die Veröffentlichungen EP 1 764 020 A1, DE 10 2010 000 573 A1 und WO 2004/032696 A2 verwiesen.

### Zusammenfassung der Erfindung

Ausgehend von dem vorgenannten Stand der Technik ist es daher Aufgabe der Erfindung, die Leistungsfähigkeit des Bodenbearbeitungsgerätes zu erhöhen und ein Abschalten von Verbrauchern während einer üblichen Anwendung des Bodenbearbeitungsgerätes zu verhindern.

Zur Lösung dieser Aufgabe wird vorgeschlagen, dass die Steuereinrichtung eingerichtet ist, eine Leistungsaufnahmesumme aus den momentan von dem ersten Verbraucher und dem zweiten Verbraucher benötigten Leistungsaufnahmen zu berechnen, die Leistungsaufnahmesumme mit der definierten maximalen Leistungsabgabe des Akkumulators zu vergleichen und bei Überschreiten der maximalen Leistungsabgabe des Akkumulators eine Leistungsaufnahme zumindest des ersten oder zweiten Verbrauchers auf einen Betrag ungleich Null zu reduzieren, wobei das Basisgerät ein Akkumulator-Management-System aufweist, welches die Leistungen, die aus dem Akkumulator entnommen werden, verwaltet, nämlich dem ersten und zweiten Verbraucher nach Bedarf Leistung zuweist und die zur Verfügung stehende maximale Leistungsabgabe des Akkumulators so auf den ersten und zweiten Verbraucher verteilt, dass es nicht zu einem Abschalten des ersten oder zweiten Verbrauchers oder des Vorsatzgerätes und/oder Basisgerätes kommt, wobei das Bodenbearbeitungsgerät einen der Steuer-einrichtung zugeordneten Datenspeicher aufweist, in welchem zum Zwecke der Energieversorgung eine definierte Rangfolge des ersten und zweiten Verbrauchers gespeichert ist, wobei die Steuereinrichtung eingerichtet ist, eine Leistungsaufnahme des in der Rangfolge als nachrangig definierten ersten oder zweiten Verbrauchers bei Vorliegen eines bestimmten Vergleichsergebnisses zu reduzieren und/oder die Leistungsaufnahme des in der Rangfolge als vorrangig definierten ersten oder zweiten Verbrauchers beizubehalten oder zu erhöhen.

Die Erfindung stattet das Bodenbearbeitungsgerät somit mit einem Ackumulator-Management-System aus, welches die Leistungen, die aus dem Ackumulator entnommen werden, verwaltet, nämlich den einzelnen Verbrauchern nach Bedarf Leistung zuweist und die zur Verfügung stehende maximale Leistungsabgabe des Akkumulators so auf die Verbraucher sowohl des Basisgerätes, als auch des Vorsatzgerätes verteilt, dass es nicht zu einem Abschalten eines elektrischen Verbrauchers oder des gesamten Vorsatzgerätes und/oder Basisgerätes kommt. Der Betrieb des Bodenbearbeitungsgerätes sowie auch dessen Basisgerätes und Vorsatzgerätes ist somit nicht durch eine individuelle Abschaltelektronik nur des Vorsatzgerätes oder Basisgerätes limitiert. So kann beispielsweise die Abschaltschwelle des Vorsatzgerätes gegenüber dem Stand der Technik deutlich erhöht werden, und es kommt nicht zu einem Abschalten des Vorsatzgerätes, falls ein Verbraucher des Basisgerätes kurzzeitig oder auch über einen längeren Zeitraum eine besonders große Leistung aufnimmt, die ansonsten - aufsummiert mit einer definierten Abschaltschwelle des Vorsatzgerätes - rein rechnerisch zu einer Überschreitung der maximalen Leistungsabgabe des Akkumulators und damit zum Abschalten zumindest des Vorsatzgerätes oder auch des gesamten Bodenbearbeitungsgerätes führen würde. Dadurch kann insgesamt auch die Auslastung des Akkumulators verbessert werden und die Verfügbarkeit der Geräteleistung optimiert werden. Mithilfe der Steuereinrichtung, die ein Leistungsmanagement bereitstellt, werden die Leistungsaufnahmen der Verbraucher ermittelt und die einzelnen Leistungsaufnahmen gegebenenfalls so verändert, dass jederzeit innerhalb der Betriebsgrenzen des Ackumulators eine an der Bodenbearbeitungsaufgabe des Bodenbearbeitungsgerätes orientierte, sinnvolle Leistungsverteilung stattfindet. Die Steuereinrichtung des Bodenbearbeitungsgerätes kann eine übergeordnete Steuereinrichtung sein, welche mit lokalen Steuereinrichtungen des Basisgerätes und des Vorsatzgerätes kommuniziert. Die übergeordnete Steuereinrichtung ermittelt die einzelnen Leistungsaufnahmen der Verbraucher des Vorsatzgerätes und Basisgerätes und addiert diese zu einer Leistungsaufnahme auf, wobei die berechnete Leistungsaufnahmesumme dann mit der definierten maximalen Leistungsabgabe des Akkumulators verglichen wird. Sofern die aktuellen Leistungsaufnahmen der Verbraucher insgesamt die maximale Leistungsabgabe des Akkumulators überschreiten, steuert die Steuereinrichtung einen oder auch mehrere Verbraucher des Basisgerätes und/oder des Vorsatzgerätes so, dass die gesamte Leistungsaufnahme des Bodenbearbeitungsgerätes reduziert wird, jedoch keiner der Verbraucher abgeschaltet wird. Dies bedeutet gleichzeitig auch, dass die Leistungsaufnahme eines oder mehrerer Verbraucher zwar reduziert wird, aber nicht so weit, dass dessen Leistungsaufnahme gleich Null wird. Vielmehr arbeitet der Verbraucher weiter, dann allerdings mit reduzierter Leistungsaufnahme. Das Bodenbearbeitungsgerät weist zudem einen der Steuereinrichtung zugeordneten Datenspeicher auf, in welchem zum Zwecke der Energieversorgung eine definierte Rangfolge der Verbraucher gespeichert ist, wobei die Steuereinrichtung eingerichtet ist, eine Leistungsaufnahme eines in der Rangfolge als nachrangig definierten Verbrauchers bei Vorliegen eines bestimmten Vergleichsergebnisses zu reduzieren und/oder die Leistungsaufnahme eines in der Rangfolge als vorrangig definierten Verbrauchers beizubehalten oder zu erhöhen. Gemäß dieser Ausgestaltung verfügt das Bodenbearbeitungsgerät über einen Datenspeicher, in dem eine Datei hinterlegt ist, die Priorisierungsinformationen über die Verbraucher des Vorsatzgerätes und des Basisgerätes beinhaltet. Die definierte Rangfolge der Verbraucher gibt an, welcher oder welche der Verbraucher vorrangig mit elektrischer Energie versorgt werden, wenn eine Leistungsaufnahmesumme aller Verbraucher gemeinsam die maximale Leistungsabgabe des Akkumulators überschreitet. Demnach wird eine Wichtigkeit für jeden einzelnen elektrischen Verbraucher definiert, welche angibt, vorzugsweise situationsbedingt, d.h. abhängig von weiteren Umgebungs- und/oder Geräteparametern, welcher elektrische Verbraucher vorrangig mit Energie versorgt wird. Die als vorrangig definierten Verbraucher werden zuerst und/oder in vollem Umfang mit elektrischer Leistung versorgt, während als nachrangig definierte Verbraucher beispielsweise nur zeitverzögert und/oder nur einen gewissen Anteil der benötigten Leistungsaufnahme zugewiesen bekommen. Beispielsweise ist die Steuereinrichtung für eine mögliche Situation dazu ausgebildet, bei der Bearbeitung eines Teppichbodens, die eine relativ hohe Leistungsaufnahme des Vorsatzgerätes, beispielsweise eines ein Reinigungselement antreibenden Motors, erfordert, die Leistungsaufnahme zu erkennen und diese gemäß der in dem Datenspeicher gespeicherten Rangfolge der Verbraucher als höher zu priorisieren als die Leistungsaufnahme für beispielsweise einen Verbraucher des Basisgerätes, beispielsweise einer Motor-Gebläse-Einheit. Das bedeutet, dass - um ein Abschalten des Verbrauchers des Vorsatzgerätes zu verhindern -, die Leistungsaufnahme der Motor-Gebläse-Einheit reduziert wird und damit deutlich geringer ist als beispielsweise deren möglicher Maximalwert, so dass der Akkumulator für den Betrieb des Verbrauchers des Vorsatzgerätes eine größere Leistungsabgabe zur Verfügung stellen kann. Verglichen mit dem Stand der Technik, bei welchem eine derartige erfindungsgemäße Steuereinrichtung nicht vorgesehen ist, würde es in einer solchen Situation mit gleichzeitig hoher Leistungsaufnahme des Vorsatzgerätes und hoher Leistungsaufnahme des Basisgerätes beispielsweise dazu kommen, dass das Vorsatzgerät auf Grund seiner eigenen Abschaltschwelle abschaltet, damit der Akkumulator eine ausreichende Leistungsabgabe für das Basisgerät, insbesondere die Motor-Gebläse-Einheit, zur Verfügung stellen kann. Insgesamt kann das Bodenbearbeitungsgerät somit auch Bodenflächen saugen, welche eine wesentlich höhere Leistungsabgabe des Akkumulators für die entsprechenden Verbraucher erfordern. In dem vorgenannten Ausführungsbeispiel kommt es des Weiteren durch die Reduzierung der Leistungsaufnahme der Motor-Gebläse-Einheit dazu, dass ein reduzierter Bewegungswiderstand des Bodenbearbeitungsgerätes über die zu bearbeitende Bodenfläche resultiert, so dass das Vorsatzgerät auf der Bodenfläche auf Grund des geringeren Unterdruckes einen geringeren Bewegungswiderstand erzeugt und somit auch leichter durch einen Nutzer fortzubewegen ist. Die Steuereinrichtung kann innerhalb des Bodenbearbeitungsgerätes vorzugsweise in dem Basisgerät positioniert sein, vorzugsweise in der Nähe des Akkumulators und des Datenspeichers. Die Steuereinrichtung ermittelt zum einen die aktuelle Leistungsaufnahme der Verbraueher, zum anderen die in dem Datenspeicher gespeicherte Rangfolge der Verbraucher

In diesem Zusammenhang kann ebenfalls vorgesehen sein, dass die Rangfolge der Verbraucher in Abhängigkeit von einer von dem Bodenbearbeitungsgerät ausgeführten Betriebsfunktion und/oder von einem Servicebedarf einer Gerätekomponente und/oder einer Art des mit dem Basisgerät verbundenen Vorsatzgerätes und/oder einer Art einer von dem Bodenbearbeitungsgerät zu bearbeitenden Bodenfläche definiert ist. Die Rangfolge der Verbraucher ist somit situationsabhängig definiert, wobei die Rangfolge der Verbraucher insbesondere abhängt von einer aktuellen Einstellung und/oder Betriebstätigkeit des Bodenbearbeitungsgerätes und/oder von Zuständen des Bodenbearbeitungsgerätes und/oder von Umgebungsbedingungen einer das Bodenbearbeitungsgerät umgebenden Umgebung. Der Datenspeicher, auf welchen die Steuereinrichtung zugreift, enthält somit nicht nur eine einzige Rangfolge der Verbraucher des Vorsatzgerätes und des Basisgerätes, sondern eine Vielzahl von gespeicherten Rangfolgen der Verbraucher, die von definierten Parametern abhängig sind, so dass die Steuereinrichtung in einer bestimmten Situation diejenige Rangfolge der Verbraucher anwendet, welche für die aktuelle Situation des Bodenbearbeitungsgerätes definiert ist.

Es wird vorgeschlagen, dass die Betriebsfunktion des Bodenbearbeitungsgerätes ein Start eines Verbrauchers, insbesondere ein Start eines Elektromotors, oder ein für eine bestimmte Bodenbearbeitungsaufgabe des Bodenbearbeitungsgerätes optimierter Bodenbearbeitungsmodus, insbesondere ein Hartbodenreinigungsmodus und/oder ein Teppichbodenreinigungsmodus, ist. In dem Fall, dass die Betriebsfunktion ein Start eines Verbrauchers ist, ist der zum Starten vorgesehene Verbraucher regelmäßig als vorrangig priorisiert, da dieser während des Hochfahrens üblicherweise eine kurzfristige erhöhte Leistungsaufnahme aufweist, welche sich durch einen steil ansteigenden Leistungspeak zeigt. Damit dieser Verbraucher, beispielsweise ein Elektromotor, optimal starten kann, wird die Leistungsaufnahme eines oder mehrerer anderer elektrischer Verbraucher für den Zeitraum des Startens des vorrangigen Verbrauchers reduziert, jedoch nicht abgeschaltet. Auf ebensolche Art und Weise kann die Steuereinrichtung die Verbraucher ebenfalls für bestimmte Bodenbearbeitungsaufgaben des Bodenbearbeitungsgerätes steuern, beispielsweise für einen Hartbodenreinigungsmodus, welcher üblicherweise eine relativ hohe Gebläse-Motor-Leistung erfordert, und/oder für einen Teppichbodenreinigungsmodus, welcher üblicherweise eine erhöhte Leistungsaufnahme eines ein Reinigungselement des Vorsatzgerätes antreibenden Verbrauchers bedingt. Der Datenspeicher, welcher der Steuereinrichtung zugeordnet ist, enthält in diesem Fall für bestimmte Szenarien, nämlich beispielsweise Start eines Verbrauchers, Einstellung eines bestimmten Bodenbearbeitungsmodus und dergleichen, eine Rangfolge der beteiligten Verbraucher, so dass die Betriebsfunktion bzw. der Bodenbearbeitungsmodus optimal ausgeführt werden kann.

Der Servicebedarf der Gerätekomponente, welcher ebenfalls die Rangfolge der Verbraucher definieren kann, ist beispielsweise ein Entleerungsbedarf eines Staubsammelbehälters und/oder ein Reinigungsbedarf eines Staubfilters und/oder ein Ladeerfordernis des Akkumulators. Gemäß dieser Ausgestaltung ermittelt die Steuereinrichtung auch Informationen, die einen Servicebedarf von Gerätekomponenten betreffen, sowie weitere Informationen, unter anderem einen Stromfluss zu einer Motor-Gebläse-Einheit, einen von einem Nutzer gewählten Bodenbearbeitungsmodus bzw. eine von dem Nutzer gewählte Gebläsestufe, einen Strom zu dem Vorsatzgerät, einen Unterdruck innerhalb eines Saugkanals des Bodenreinigungsgerätes, einen Füllstand eines Staubsammelbehälters, eine Staubbelegung eines Staubfilters und/oder einen Ladezustand des Akkumulators. Die Steuereinrichtung kann diese Informationen miteinander verrechnen, um die Verbraucher des Bodenbearbeitungsgerätes so zu steuern, dass ein für die jeweilige Situation optimales Bodenbearbeitungsergebnis erreicht werden kann.

Des Weiteren kann die Steuereinrichtung eingerichtet sein, bei Ermitteln einer als maximal definierten Leistungsaufnahme eines Verbrauchers einen anderen Verbraucher zeitverzögert mit Leistung zu versorgen und/oder die Leistungsaufnahme des anderen Verbrauchers über einen definierten Zeitraum auf einen vorgesehenen Betrag zu steigern. Beim Starten eines Verbrauchers, beispielsweise einer Motor-Gebläse-Einheit des Basisgerätes, wird eine sehr große Leistung aus dem Akkumulator entnommen, welche beispielsweise mehr als 50% oder sogar mehr als 75% der maximalen Leistungsabgabe des Akkumulators beträgt. Die Steuereinrichtung priorisiert abhängig von der definierten Rangfolge der Verbraucher die Leistungsaufnahme für die Motor-Gebläse-Einheit beispielsweise höher als eine Leistungsaufnahme eines Verbrauchers des Vorsatzgerätes. Beispielsweise kann dem Verbraucher des Vorsatzgerätes nur ein zeitverzögertes Starten erlaubt werden und/oder auch ein langsamerer Startvorgang, so dass die Peaks der Leistungsaufnahmen der Verbraucher des Vorsatzgerätes und des Basisgerätes nicht zeitlich übereinander liegen. Insbesondere kann die Steuerung auch einen von dem Nutzer gewählten Bodenbearbeitungsmodus erkennen und ermitteln, ob überhaupt eine Änderung der Leistungsaufnahmen der einzelnen Verbraucher erforderlich ist, da beispielsweise bei einer Ohnehin relativ geringen Leistungsaufnahme der Verbraucher genügend Leistung zum Anlaufen eines Verbrauchers zur Verfügung steht.

Des Weiteren wird vorgeschlagen, dass das Bodenbearbeitungsgerät einen Wahlschalter zur Wahl einer Betriebsfunktion des Bodenbearbeitungsgerätes durch einen Nutzer aufweist, wobei die Steuereinrichtung eingerichtet ist, die Leistungsaufnahme der Verbraucher in Abhängigkeit von einer Einstellung des Wahlschalters zu steuern. Über den Wahlschalter kann ein Nutzer beispielsweise einen gewünschten Bodenbearbeitungsmodus des Bodenbearbeitungsgerätes einstellen, welcher für eine Bearbeitung eines Hartbodens oder für eine Bearbeitung eines Teppichbodens optimiert ist. In Abhängigkeit von der Wahl des jeweiligen Bodenbearbeitungsmodus, welcher unter anderem auch einen Betrieb bestimmter Verbraucher mit bestimmten Leistungsaufnahmen der Verbraucher beinhaltet, kann die Steuereinrichtung dann aus dem Datenspeicher eine entsprechende Rangfolge der Verbraucher entnehmen, so dass als vorrangig definierte Verbraucher bevorzugt mit Leistung versorgt werden. Bei dieser Ausgestaltung ist es nicht erforderlich, dass eine Sensorik des Bodenbearbeitungsgerätes während eines bereits laufenden Bodenbearbeitungsbetriebs Parameter der aktuellen Situation detektiert, sondern vielmehr sind die benötigten Parameter für den jeweiligen Bodenbearbeitungsmodus im Voraus durch den gewählten Bodenbearbeitungsmodus bekannt, so dass frühzeitig die Leistungsaufnahmen der Verbraucher gesteuert werden können.

Insbesondere wird vorgeschlagen, dass die Steuereinrichtung eingerichtet ist, eine durch einen Nutzer getätigte Auswahl einer Betriebsfunktion und/oder eine von dem Nutzer eingestellte aktuelle Leistungsaufnahme mit einer für eine aktuelle Umgebungsbedingung des Bodenbearbeitungsgerätes als optimal definierten Leistungsaufnahme des Verbrauchers zu vergleichen, insbesondere eine Ist-Leistungsaufnahme des Verbrauchers mit einer definierten Soll-Leistungsaufnahme zur Bearbeitung der Bodenfläche zu vergleichen, und im Falle einer Abweichung die definierte Soll-Leistungsaufnahme des Verbrauchers einzustellen. Diese Ausgestaltung beinhaltet eine Überprüfung der Plausibilität einer von einem Nutzer getätigten Auswahl der Betriebsfunktion bzw. gewählten Leistungsaufnahme eines Verbrauchers dahingehend, ob diese Auswahl für eine aktuelle Umgebungsbedingung geeignet ist. Die Umgebungsbedingung kann beispielsweise die Art einer Bodenfläche sein, auf welcher das Bodenbearbeitungsgerät aktuell verfährt, so dass der Nutzer beispielsweise nicht für die Reinigung eines Teppichbodens einen Hartbodenmodus wählt oder für die Reinigung eines Hartbodens einen Teppichbodenmodus. Die Steuereinrichtung vergleicht somit die Auswahl des Nutzers mit den aktuellen Umgebungsbedingungen und steuert die Leistungsaufnahmen der Verbraucher nach den definierten Soll-Leistungsaufnahmen. So können beispielsweise von einem Nutzer gewählte Einstellungen, die unvorteilhaft sind, korrigiert werden, um ein optimales Bearbeitungsergebnis zu erhalten. Beispielsweise kann somit verhindert werden, dass eine Motor-Gebläse-Einheit auf Teppichboden mit hoher Leistungsaufnahme betrieben wird. Um dies zu erreichen, ist die Steuereinrichtung beispielsweise in Kommunikation sowohl mit einem Wahl-Schalter des Bodenbearbeitungsgerätes, als auch mit entsprechenden Sensoren und den elektrischen Verbrauchern des Basisgerätes und des Vorsatzgerätes.

Des Weiteren wird vorgeschlagen, dass das Bodenbearbeitungsgerät eine Sensorik mit einem oder mehreren Sensoren aufweist, wobei die Sensoren ausgewählt sind, aus der Gruppe: Abstandssensor zur Detektion einer Bodenhöhe eines Saugmundes des Vorsatzgerätes zu einer zu reinigenden Fläche, Drucksensor zur Messung eines Drucks innerhalb eines Saugkanals des Bodenbearbeitungsgerätes, Sensor zur Detektion eines elektronischen oder optischen Identifikationselementes des Vorsatzgerätes, Schiebekraftsensor zur Messung einer zwischen dem Vorsatzgerät und einer zu reinigenden Bodenfläche auftretenden Schiebekraft, Bodenartsensor, insbesondere optischer Sensor oder Ultraschallsensor zur Detektion eines von einer zu reinigenden Bodenfläche gestreuten Licht- oder Ultraschallsignals, Stromsensor zur Messung einer Stromaufnahme eines Verbrauchers. Die Sensorik bzw. die Sensoren, dienen zum Erkennen kritischer Zustände des Bodenbearbeitungsgerätes, welche eine Anpassung der Leistungsaufnahmen der Verbraucher des Vorsatzgerätes und/oder des Basisgerätes erfordern. Beispielsweise kann ein Abstandssensor zur Detektion einer Bodenhöhe eines Saugmundes und/oder eines Vorsatzgerätes eines verlagerbaren Reinigungselementes zu einer zu reinigenden Fläche vorgesehen sein. Des Weiteren kann eine Motorleistung über ein Produkt aus Spannung und aufgenommenem Strom ermittelt werden. Es kann ein Unterdruck in einem Saugkanal des Vorsatzgerätes und/oder des Basisgerätes gemessen werden. Darüber hinaus kann auch eine Schiebekraftdetektion erfolgen, wobei die Schiebekraft von einem Reibwiderstand abhängt, welcher zwischen dem Vorsatzgerät und einer zu bearbeitenden Bodenfläche auftritt. Eine erhöhte Schiebekraft erfordert beispielsweise eine erhöhte Leistungsaufnahme eines den angetriebenen Rädern zugeordneten Motors, eine erhöhte Leistungsaufnahme eines auf die Bodenfläche einwirkenden Reinigungselementes und dergleichen. Des Weiteren kann ein Bodenerkennungssensor vorgesehen sein, welcher die Art der zu bearbeitenden Bodenfläche erkennt, beispielsweise mittels Lichtreflektion oder Ultraschallreflektion an der Bodenfläche. Des Weiteren empfiehlt sich ein Sensor zur Detektion eines elektronischen oder optischen Identifikationselementes des Vorsatzgerätes. Dieser Sensor ist vorzugsweise dem Basisgerät des Bodenbearbeitungsgerätes zugeordnet, nämlich so, dass der Sensor das Identifikationselement des Vorsatzgerätes auslesen kann. Ein optisches Identifikationselement kann beispielsweise ein Barcode, QR-Code oder auch ein durch LEDs übermittelter Farb-Code sein. Der Sensor weist beispielsweise eine Kamera, einen Kamera-Chip, eine oder mehrere Fotodioden oder ähnliches auf, um das optische Identifikationselement auslesen zu können. Des Weiteren kann das Identifikationselement auch ein elektronisches Identifikationselement sein, welches definierte elektronische Signale an den Sensor übermittelt, so dass die Identität des Vorsatzgerätes festgestellt werden kann und die Steuereinrichtung für dieses Vorsatzgerät optimale Betriebsbedingungen, nämlich Leistungsaufnahmen der Verbraucher des Vorsatzgerätes, herstellen kann. Beispielsweise kann der an dem Basisgerät angeordnete Sensor erkennen, dass das Vorsatzgerät eine Hartbodendüse beinhaltet, welche üblicherweise eine maximale Gebläse-Leistung einer Motor-Gebläse-Einheit des Basisgerätes zulässt, so dass die Leistungsaufnahmen der Verbraucher des Vorsatzgerätes bzw. des Basisgerätes dementsprechend definiert und gesteuert werden können.

Schließlich wird vorgeschlagen, dass die Steuereinrichtung eingerichtet ist, eine Leistungsaufnehme eines Verbrauchers in Abhängigkeit von einem Detektionsergebnis eines oder mehrerer Sensoren zu steuern. In diesem Fall empfängt die Steuereinrichtung die Messsignale der Sensoren und ermittelt daraus die aktuellen Betriebs- und/oder Umgebungsbedingungen des Bodenbearbeitungsgerätes, so dass vorzugsweise unter Rückgriff auf eine in einem Datenspeicher definierte Rangfolge der Verbraucher die Leistungsaufnahme eines oder mehrerer Verbraucher gesteuert werden kann, um ein optimales Bodenbearbeitungsergebnis zu erreichen, ohne dass ein Verbraucher des Bodenbearbeitungsgerätes abgeschaltet werden muss, weil die Leistungsaufnahmesumme der Verbraucher die maximale Leistungsabgabe des Akkumulators überschreitet.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät mit einem Basisgerät und einem lösbar mit dem Basisgerät verbundenen Vorsatzgerät,

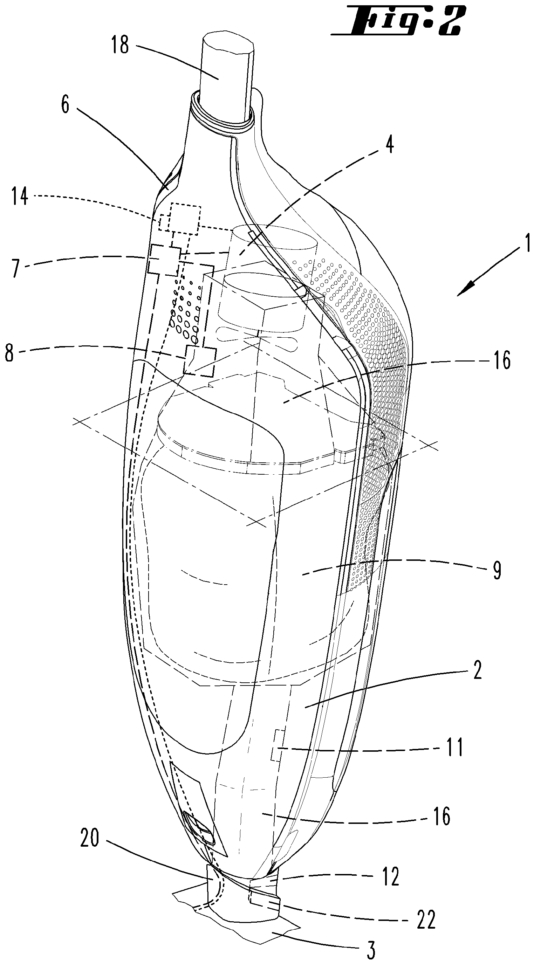

- Fig. 2: einen vergrößerten Teilbereich des Basisgerätes gemäß Fig. 1,

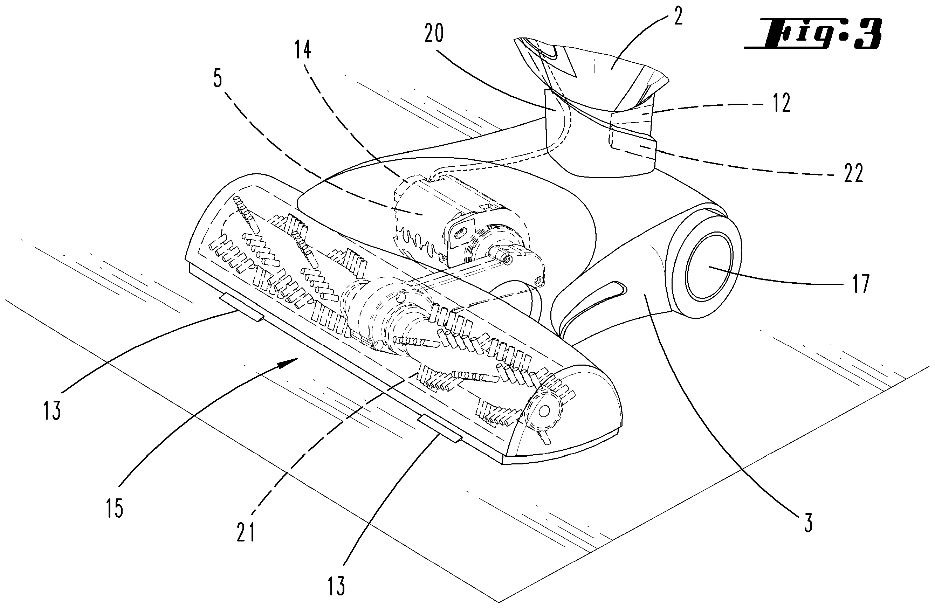

- Fig. 3: einen vergrößerten Teilbereich des Vorsatzgerätes gemäß Fig. 1.

### Beschreibung der Ausführungsformen

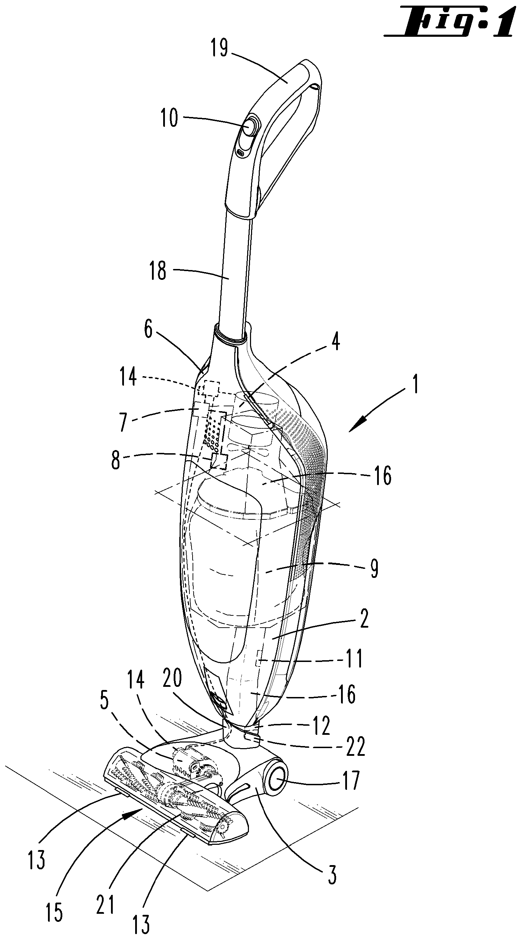

Fig. 1 zeigt ein erfindungsgemäßes Bodenbearbeitungsgerät 1, welches hier exemplarisch als handgeführter Staubsauger ausgebildet ist. Das Bodenbearbeitungsgerät 1 verfügt über ein Basisgerät 2 und ein damit lösbar verbundenes Vorsatzgerät 3. Das Basisgerät 2 und das Vorsatzgerät 3 sind über einen Verbindungsbereich 20 lösbar miteinander verbunden. Das Basisgerät 2 weist einen Stiel 18 mit einem Handgriff 19 auf, über welchen ein Nutzer das Bodenbearbeitungsgerät 1 während einer üblichen Bodenbearbeitung über eine zu bearbeitende Bodenfläche schieben kann. Während einer Bodenbearbeitung führt der Nutzer das Bodenbearbeitungsgerät 1 üblicherweise in abwechselnden Hin- und Herbewegungen von sich weg bzw. zu sich hin. An dem Handgriff 19 ist des Weiteren ein Wahlschalter 10 vorgesehen, welcher zum Ein- und Ausschalten des Bodenbearbeitungsgerätes 1 und/oder zum Einstellen eines Bodenbearbeitungsmodus des Bodenbearbeitungsgerätes 1 dient.

Das Vorsatzgerät 3 weist Räder 17 auf, welche das Verlagern des Bodenbearbeitungsgerätes 1 über die zu bearbeitende Bodenfläche erleichtern. An dem Vorsatzgerät 3 ist des Weiteren ein Saugmund 15 ausgebildet, durch welchen Sauggut in das Vorsatzgerät 3 bzw. das Bodenbearbeitungsgerät 1 aufgenommen werden kann. Dem Saugmund 15 ist ein Bodenbearbeitungselement 21, hier eine rotierende Reinigungsbürste, zugeordnet.

In dem Basisgerät 2 befinden sich ein Staubsammelbehälter 9, eine Motor-Gebläse-Einheit, deren Motor einen ersten elektrischen Verbraucher 4 darstellt, und ein zwischen dem Staubsammelbehälter 9 und der Motor-Gebläse-Einheit ausgebildeter Saugkanal 16. Der Saugkanal 16 umfasst auch einen Abschnitt von dem Verbindungsbereich 20 zu dem Staubsammelbehälter 9. Die Motor-Gebläse-Einheit bzw. der Saugkanal 16 ist über den Staubsammelbehälter 9 und den Verbindungsbereich 20 strömungstechnisch mit dem Vorsatzgerät 3 bzw. dessen Saugmund 15 verbunden. Mit Hilfe der Motor-Gebläse-Einheit kann Sauggut von einer zu reinigenden Bodenfläche aufgesaugt werden, wobei das Sauggut durch den Saugmund 15 in das Vorsatzgerät 3 gelangt, danach über den Verbindungsbereich 20 in das Basisgerät 2 strömt und dort in dem Staubsammelbehälter 9 (an einem nicht dargestellten Filterelement, beispielsweise einem Staubfilterbeutel) abgeschieden und gesammelt wird. Da das Sauggut innerhalb des Staubsammelbehälters 9 verbleibt, gelangt ausschließlich gereinigte Luft von dem Staubsammelbehälter 9 zu der Motor-Gebläse-Einheit, das heißt durch den dazwischen ausgebildeten Saugkanal 16.

Das Vorsatzgerät 3 weist des Weiteren ein Identifikationselement 22 auf, welches von einem zugeordneten Sensor 12 des Basisgerätes 2 ausgelesen werden kann. Das Identifikationselement 22 ist hier beispielsweise ein Barcode, welcher Informationen über die Art des Vorsatzgerätes 3 enthält, unter anderem beispielsweise Informationen zu elektrischen Verbrauchern 5 des Vorsatzgerätes 3, beispielsweise auch eine maximale Leistungsaufnahme des jeweiligen Verbrauchers 5.

In dem Basisgerät 2 des Bodenbearbeitungsgerätes 1 sind des Weiteren ein Akkumulator 6, eine Steuereinrichtung 7 und ein Datenspeicher 8 vorgesehen. Der Akkumulator 6 dient zum Versorgen der elektrischen Verbraucher 4 des Basisgerätes 2 und der elektrischen Verbraucher 5 des Vorsatzgerätes 3 mit Energie. Die Steuereinrichtung 7 ist einerseits mit dem Akkumulator 6 und andererseits mit den elektrischen Verbrauchern 4, 5 des Basisgerätes 2 und des Vorsatzgerätes 3 verbunden, um die Leistungsaufnahmen der Verbraucher 4, 5 zu steuern und eine Leistungsabgabe des Akkumulators 6 zu überwachen. Zur Steuerung der Leistungsaufnahmen der Verbraucher 4, 5 greift die Steuereinrichtung 7 auf den Datenspeicher 8 zu. Dieser enthält eine Datei mit definierten Rangfolgen der Verbraucher 4, 5, wobei die Rangfolge die Leistungsaufnahme der Verbraucher 4, 5 beeinflusst, derart, dass ein Verbraucher, 4, 5 bevorzugt mit elektrischer Energie versorgt wird. Ein als vorrangig definierter Verbraucher 4, 5 wird bevorzugt bzw. vollständig mit derjenigen Leistung versorgt, welche er für seinen momentanen Betrieb benötigt. Sollte sich eine Situation einstellen, bei welcher eine Leistungsaufnahmesumme mehrerer Verbraucher 4,5 ein definierte maximale Leistungsabgabe des Akkumulators 6 übersteigt, wird ein als vorrangig definierter Verbraucher 4,5 zuerst und vorzugsweise mit seiner benötigten Energie versorgt, während ein als nachrangig definierter Verbraucher nur teilweise und/oder zeitverzögert mit Energie versorgt wird. Zu diesem Zweck wird die Leistungsaufnahme des in der Rangfolge als nachrangig definierten Verbrauchers 4, 5 reduziert.

Die in dem Datenspeicher 8 gespeicherte Rangfolge der Energieversorgung der Verbraucher 4, 5 ist situationsbezogen definiert. Dies bedeutet beispielsweise, dass für unterschiedliche Betriebsfunktionen oder Bodenbearbeitungsmodi des Bodenbearbeitungsgerätes 1 unterschiedliche Rangfolgen definiert sein können. Bei der Betriebsfunktion des Bodenbearbeitungsgerätes 1 kann es sich beispielsweise um einen Start eines Verbrauchers 4, 5 handeln. Ein Bearbeitungsmodus kann beispielsweise ein Hartbodenreinigungsmodus zur Reinigung eines Hartbodens oder ein Teppichbodenreinigungsmodus zur Reinigung eines Teppichbodens sein. Die Betriebsfunktionen bzw. Bodenbearbeitungsmodi erfordern unterschiedliche Leistungseinstellungen der Verbraucher 4, 5. Ein Verbraucher 4, 5, welcher beispielsweise gerade gestartet wird, erfordert kurzzeitig eine erhöhte Leistungsaufnahme, welche die Leistungsaufnahmesumme aller Verbraucher 4, 5 des Vorsatzgerätes 3 und des Basisgerätes 2 kurzzeitig stark erhöhen kann und eine maximale Leistungsabgabe des Akkumulators 6 übersteigen könnte, wenn die Steuereinrichtung 7 hier nicht erfindungsgemäß eingreifen würde und die Leistungsabgabe eines oder mehrerer anderer Verbraucher 4, 5 dafür reduziert würde. Die Rangfolge der Verbraucher 4, 5 kann darüber hinaus auch für unterschiedliche Höhen des Saugmundes 15 über der zu bearbeitenden Fläche, für einen Unterdruck innerhalb des Saugkanals 16, einen Reibwiderstand zwischen dem Vorsatzgerät 3 und der zu reinigenden Fläche (Schiebekraft) sowie für die Art der zu bearbeitenden Fläche oder die Art des aktuell an dem Basisgerät 2 angeschlossenen Vorsatzgerätes 3 definiert sein.

Um in dem Datenspeicher 8 eine bestimmte Rangfolge der Verbraucher 4, 5 für eine aktuelle Situation auswählen zu können, weist das Bodenbearbeitungsgerät 1 eine Mehrzahl von Sensoren 11, 12, 13, 14 auf, die eine aktuelle Situation, Betriebsfunktion und/oder einen aktuellen Bodenbearbeitungsmodus des Bodenbearbeitungsgerätes 1 erkennen können. Die detektierten Informationen dienen als Grundlage für die Steuerung durch die Steuereinrichtung 7. Die Sensoren 11, 12, 13, 14 umfassen hier beispielsweise einen Sensor 11, welcher als Drucksensor ausgebildet ist und einen Druck in dem Saugkanal 16 misst, einen weiteren Sensor 12, welcher die Art des angeschlossenen Vorsatzgerätes 3 durch Auslesen des Identifikationselementes 22 des Vorsatzgerätes 3 detektiert, einen Sensor 13 zur Detektion einer Bodenart der zu bearbeitenden Bodenfläche sowie Sensoren 14, welche eine aktuelle Leistungsaufnahme der Verbraucher 4, 5 messen, nämlich hier beispielsweise der Motor-Gebläse-Einheit des Basisgerätes 2 und eines Motors zum Antrieb des Bodenbearbeitungselementes 21 des Vorsatzgerätes 3.

Eine erste Situation des Bodenbearbeitungsgerätes 1 kann beispielsweise einen Start der Motor-Gebläse-Einheit, d.h. des Verbrauchers 4, des Basisgerätes 2 beinhalten. Für das Hochlaufen des Verbrauchers 4 wird eine relativ hohe Leistung aus dem Akkumulator 6 entnommen. Die Steuereinrichtung 7 priorisiert die Leistungsaufnahme des Verbrauchers 4 aufgrund der in dem Datenspeicher 8 gespeicherten Informationen höher als beispielsweise die Leistungsaufnahme für den Betrieb des Motors des Vorsatzgerätes 3, d.h. des zweiten Verbrauchers 5. Die Steuereinrichtung 7 erlaubt dem Verbraucher 5 des Vorsatzgerätes 3 beispielsweise nur zeitverzögert zu starten und gegebenenfalls auch langsamer hochzulaufen, um mögliche Leistungspeaks der Verbraucher 4, 5 nicht zeitgleich auftreten zu lassen. Je nach einer von dem Nutzer über den Wahlschalter 10 gewählten Betriebsstufe oder einem gewählten Bodenbearbeitungsmodus kann die Steuereinrichtung 7 darüber hinaus frühzeitig erkennen, ob überhaupt eine Veränderung der aktuellen Leistungsaufnahmen der Verbraucher 4, 5 erforderlich ist. Sofern beispielsweise ein Bodenbearbeitungsmodus eingestellt ist, welcher ohnehin relativ wenig Leistung für die Verbraucher 4, 5 erfordert, können die Leistungsaufnahmen gegebenenfalls unverändert bleiben.

In einer weiteren Situation kann das Vorsatzgerät 3 beispielsweise bereits eingeschaltet sein und auf einem Teppichboden eine Bodenbearbeitung ausführen. Eine Bearbeitung eines Teppichbodens erfordert üblicherweise eine relativ große Leistungsaufnahme des Vorsatzgerätes 3, da der Motor des Bodenbearbeitungselementes 21 relativ viel Energie zur Rotation des Bodenbearbeitungselementes 21 benötigt. Dies ist durch den Reibwiderstand zwischen dem Bodenbearbeitungselement 21 und der zu bearbeitenden Fläche bedingt. Die Steuereinrichtung 7 erkennt die hohe Leistungsaufnahme des Verbrauchers 5 des Vorsatzgerätes 3 und priorisiert die Leistungsaufnahme höher als beispielsweise die Leistungsaufnahme des Verbrauchers 4 des Basisgerätes 2, das heißt der Motor-Gebläse-Einheit. Falls die Motor-Gebläse-Einheit gerade ebenfalls mit einer relativ hohen Leistungsaufnahme betrieben wird, welche zusammen mit der benötigten Leistungsaufnahme des Vorsatzgerätes 3 die maximale Leistungsabgabe des Akkumulators 6 übersteigen würde, reduziert die Steuereinrichtung 7 die Leistung der Motor-Gebläse-Einheit auf eine niedrigere Leistungsstufe, um das Abschalten des Verbrauchers 5 des Vorsatzgerätes 3 zu verhindern. In diesem Fall wird der Verbraucher 4 des Basisgerätes 2 mit geringerer Leistung als zuvor betrieben. Die Leistungsdifferenz, um welche die Leistungsaufnahme des Verbrauchers 4 des Basisgerätes 2 reduziert wurde, steht entsprechend dem Verbraucher 5 des Vorsatzgerätes 3 zur Verfügung. Ein Abschalten beider Verbraucher 4, 5 des Basisgerätes 2 und des Vorsatzgerätes 3 wird verhindert, da beide Verbraucher, 4, 5 betrieben werden, allerdings der Verbraucher 4 des Basisgerätes 2 mit reduzierter Leistungsaufnahme. Bei der Reduzierung der Leistungsaufnahme des Verbrauchers 4 des Basisgerätes 2 ist es des Weiteren vorteilhaft, dass die Motor-Gebläse-Einheit einen entsprechend geringeren Unterdruck auf der zu bearbeitenden Bodenfläche erzeugt und sich dadurch auch die Schiebekraft des Bodenbearbeitungsgerätes 1 auf der zu bearbeitenden Bodenfläche reduziert.

In einer weiteren Situation kann das Bodenbearbeitungsgerät 1 beispielsweise von einem Hartboden auf einen Teppichboden fahren. In dem Fall detektieren die Sensoren 13 die veränderte Bodenart der zu reinigenden Bodenfläche. Auf Hartboden hat der Verbraucher 4 des Basisgerätes 4, welcher der Motor-Gebläse-Einheit zugeordnet ist, zunächst eine maximale Leistungsaufnahme gezeigt. Der Verbraucher 5 des Vorsatzgerätes 3, welcher das Bodenbearbeitungselement 21 antreibt, hat hingegen nur eine sehr geringe Leistung konsumiert, beispielsweise nur wenige Watt, so dass der Akkumulator 6 insgesamt stärker von dem Verbraucher 4 des Basisgerätes 2 genutzt wurde als von dem Verbraucher 5 des Vorsatzgerätes 3. Wenn das Bodenbearbeitungsgerät 1 nun von dem Hartboden auf einen Teppichboden wechselt, taucht das als Borstenelement ausgebildete Bodenbearbeitungselement 21 in die Fasern des Teppichbodens ein, so dass der das Bodenbearbeitungselement 21 antreibende elektrische Verbraucher 5 eine wesentlich höhere Leistungsaufnahme zeigt, um das Bodenbearbeitungselement 21 zu rotieren. Die Steuereinrichtung 7 erkennt einerseits die veränderte Art der Bodenfläche und andererseits die erhöhte Leistungsaufnahme des Verbrauchers 5 des Vorsatzgerätes 3 durch die Messwerte der Sensoren 13 und 14 und entnimmt aus dem Datenspeicher 8 eine für diese Situation definierte Rangfolge der Verbraucher 4, 5, welche hier vorzugsweise beinhaltet, dass die Leistungsaufnahme des Verbrauchers 4 des Basisgerätes 2, das heißt der Motor-Gebläse-Einheit, heruntergeregelt wird, um die höhere Leistungsaufnahme des Verbrauchers 5 des Vorsatzgerätes 3, das heißt des Motors des Bodenbearbeitungselementes 21, zu kompensieren. Durch die reduzierte Gebläseleistung des Verbrauchers 4 des Basisgerätes 2 sinkt gleichzeitig auch der Unterdruck an dem Saugmund 5 des Vorsatzgerätes 3, so dass wiederum die Bewegungswiderstände sinken und auch die Bürstleistung insgesamt reduziert wird.

Eine Vielzahl weiterer Szenarien sind denkbar. Die vorgenannten Szenarien wurden lediglich beispielhaft zur Verdeutlichung der Funktionsweise der Steuereinrichtung 7 angegeben und sollen die Erfindung nicht beschränken.

### Liste der Bezugszeichen

- 1: Bodenbearbeitungsgerät
- 2: Basisgerät
- 3: Vorsatzgerät
- 4: Erster elektrischer Verbraucher
- 5: Zweiter elektrischer Verbraucher
- 6: Akkumulator
- 7: Steuereinrichtung
- 8: Datenspeicher
- 9: Staubsammelbehälter
- 10: Wahlschalter
- 11: Sensor
- 12: Sensor
- 13: Sensor
- 14: Sensor
- 15: Saugmund
- 16: Saugkanal
- 17: Rad
- 18: Stiel
- 19: Handgriff
- 20: Verbindungsbereich
- 21: Bodenbearbeitungselement
- 22: Identifikationselement

## Patentansprüche

1. Bodenbearbeitungsgerät (1) mit einem Basisgerät (2) und einem lösbar mit dem Basisgerät (2) verbindbaren Vorsatzgerät (3), wobei das Basisgerät (2) mindestens einen ersten elektrischen Verbraucher (4) und das Vorsatzgerät (3) mindestens einen zweiten elektrischen Verbraucher (5) aufweist, wobei das Bodenbearbeitungsgerät (1) des Weiteren einen Akkumulator (6) zur Energieversorgung der elektrischen Verbraucher (4, 5) und eine Schutzelektronik aufweist, welche eine durch die Betriebsgrenzen des Akkumulators (6) bestimmte maximale Leistungsabgabe des Akkumulators (6) definiert, welche beim Überschreiten zum Abschalten des Vorsatzgerätes (3) oder Bodenbearbeitungsgerätes (1) führen würde, wobei das Bodenbearbeitungsgerät (1) eine Steuereinrichtung (7) zum Ermitteln und zum Steuern einer für seinen momentanen Betrieb benötigten Leistungsaufnahme des ersten Verbrauchers (4) des Basisgerätes (2) und einer für seinen momentanen Betrieb benötigten Leistungsaufnahme des zweiten Verbrauchers (5) des Vorsatzgerätes (3) aufweist, wobei die Steuereinrichtung (7) eingerichtet ist, eine Leistungsaufnahmesumme aus den momentan von dem ersten Verbraucher (4) und dem zweiten Verbraucher (5) benötigten Leistungsaufnahmen zu berechnen, die Leistungsaufnahmesumme mit der definierten maximalen Leistungsabgabe des Akkumulators (6) zu vergleichen und bei Überschreiten der maximalen Leistungsabgabe des Akkumulators (6) eine Leistungsaufnahme zumindest des ersten oder zweiten Verbrauchers (4, 5) auf einen Betrag ungleich Null zu reduzieren, wobei das Basisgerät (2) ein Akkumulator-Management- System aufweist, welches die Leistungen, die aus dem Akkumulator (6) entnommen werden, verwaltet, nämlich dem ersten und zweiten Verbraucher (4,5) nach Bedarf Leistung zuweist und die zur Verfügung stehende maximale Leistungsabgabe des Akkumulators (6) so auf den ersten und zweiten Verbraucher (4, 5) verteilt, dass es nicht zu einem Abschalten des ersten oder zweiten Verbrauchers (4, 5) oder des Vorsatzgerätes (3) und/oder Basisgerätes (2) kommt, wobei das Bodenbearbeitungsgerät (1) einen der Steuereinrichtung (7) zugeordneten Datenspeicher (8) aufweist, in welchem zum Zwecke der Energieversorgung eine definierte Rangfolge des ersten und zweiten Verbrauchers (4, 5) gespeichert ist, wobei die Steuereinrichtung (7) eingerichtet ist, eine Leistungsaufnahme des in der Rangfolge als nachrangig definierten ersten oder zweiten Verbrauchers (4, 5) bei Vorliegen eines bestimmten Vergleichsergebnisses zu reduzieren und/oder die Leistungsaufnahme des in der Rangfolge als vorrangig definierten ersten oder zweiten Verbrauchers (4, 5) beizubehalten oder zu erhöhen.

2. Bodenbearbeitungsgerät (1) nach Anspruch 1, **dadurch gekennzeichnet, dass** die Rangfolge des ersten und zweiten Verbrauchers (4, 5) in Abhängigkeit von einer von dem Bodenbearbeitungsgerät (1) ausgeführten Betriebsfunktion und/oder von einem Servicebedarf einer Gerätekomponente und/oder einer Art des mit dem Basisgerät (2) verbundenen Vorsatzgerätes (3) und/oder einer Art einer von dem Bodenbearbeitungsgerät (1) zu bearbeitenden Bodenfläche definiert ist.

3. Bodenbearbeitungsgerät (1) nach Anspruch 2, **dadurch gekennzeichnet, dass** die Betriebsfunktion ein Start des ersten oder zweiten Verbrauchers (4, 5), insbesondere eines Elektromotors, oder ein für eine bestimmte Bodenbearbeitungsaufgabe des Bodenbearbeitungsgerätes (1) optimierter Bodenbearbeitungsmodus, insbesondere ein Hartbodenreinigungsmodus und/oder Teppichbodenreinigungsmodus, ist.

4. Bodenbearbeitungsgerät (1) nach Anspruch 2 oder 3, **dadurch gekennzeichnet, dass** der Servicebedarf der Gerätekomponente ein Entleerungsbedarf eines Staubsammelbehälters (9) und/oder ein Reinigungsbedarf eines Staubfilters und/oder ein Ladeerfordernis des Akkumulators (6) ist.

5. Bodenbearbeitungsgerät (1) nach einem der vorhergehenden Ansprüche, **dadurch gekennzeichnet, dass** die Steuereinrichtung (7) eingerichtet ist, bei Ermitteln einer als maximal definierten Leistungsaufnahme des ersten Verbrauchers (4) den zweiten Verbraucher (5) zeitverzögert mit Leistung zu versorgen oder umgekehrt, und/oder die Leistungsaufnahme des ersten oder zweiten Verbrauchers (4, 5) über einen definierten Zeitraum auf einen vorgesehenen Betrag zu steigern.

6. Bodenbearbeitungsgerät (1) nach einem der vorhergehenden Ansprüche, **gekennzeichnet durch** einen Wahlschalter (10) zur Wahl einer Betriebsfunktion des Bodenbearbeitungsgerätes (1) durch einen Nutzer, wobei die Steuereinrichtung (7) eingerichtet ist, die Leistungsaufnahme des ersten und zweiten Verbrauchers (4, 5) in Abhängigkeit von einer Einstellung des Wahlschalters (10) zu steuern.

7. Bodenbearbeitungsgerät (1) nach Anspruch 6, **dadurch gekennzeichnet, dass** die Steuereinrichtung (7) eingerichtet ist, eine durch einen Nutzer getätigte Auswahl einer Betriebsfunktion und/oder eine von dem Nutzer eingestellte aktuelle Leistungsaufnahme mit einer für eine aktuelle Umgebungsbedingung des Bodenbearbeitungsgerätes (1) als optimal definierten Leistungsaufnahme des ersten und zweiten Verbrauchers (4, 5) zu vergleichen, insbesondere eine Ist-Leistungsaufnahme des ersten oder zweiten Verbrauchers (4, 5) mit einer definierten Soll-Leistungsaufnahme zur Bearbeitung der Bodenfläche zu vergleichen, und im Falle einer Abweichung die definierte Soll-Leistungsaufnahme des ersten oder zweiten Verbrauchers (4, 5) einzustellen.

8. Bodenbearbeitungsgerät (1) nach einem der vorhergehenden Ansprüche, **gekennzeichnet durch** eine Sensorik, welche einen oder mehrere Sensoren (11, 12, 13, 14) aufweist, ausgewählt aus der Gruppe: Abstandssensor zur Detektion einer Bodenhöhe eines Saugmundes (15) des Vorsatzgerätes (3) zu einer zu reinigenden Fläche, Drucksensor (11) zur Messung eines Drucks innerhalb eines Saugkanals (16) des Bodenbearbeitungsgerätes (1), Sensor (12) zur Detektion eines elektronischen oder optischen Identifikationselementes (22) des Vorsatzgerätes (3), Schiebekraftsensor zur Messung einer zwischen dem Vorsatzgerät (3) und einer zu reinigenden Bodenfläche auftretenden Schiebekraft, Bodenartsensor (13), insbesondere optischer Sensor oder Ultraschallsensor zur Detektion eines von einer zu reinigenden Bodenfläche gestreuten Licht- oder Ultraschallsignals, Stromsensor (14) zur Messung einer Stromaufnahme des ersten oder zweiten Verbrauchers (4, 5).

9. Bodenbearbeitungsgerät (1) nach Anspruch 8, **dadurch gekennzeichnet, dass** die Steuereinrichtung (7) eingerichtet ist, eine Leistungsaufnahme des ersten und zweiten Verbrauchers (4, 5) in Abhängigkeit von einem Detektionsergebnis eines oder mehrerer Sensoren (11, 12, 13, 14) zu steuern.

## Claims

1. Floor treatment device (1) comprising a base device (2) and an attachment device (3) which can be detachably connected to the base device (2), wherein the base device (2) has at least one first electric consumer (4) and the attachment device (3) has at least one second electric consumer (5), wherein the floor treatment device (1) further has an accumulator (6) for supplying energy to the electric consumers (4, 5) and has protective electronics which define a maximum power output of the accumulator (6) that is determined by the operating limits of the accumulator (6), which power output, if exceeded, would lead to the attachment device (3) or floor treatment device (1) switching off, wherein the floor treatment device (1) has a control apparatus (7) for detecting and controlling a power consumption of the first consumer (4) of the base device (2) that is required for its current operation and a power consumption of the second consumer (5) of the attachment device (3) that is required for its current operation, wherein the control apparatus (7) is designed to calculate a power consumption sum from the power consumptions currently required by the first consumer (4) and the second consumer (5), to compare the power consumption sum with the defined maximum power output of the accumulator (6) and, when the maximum power output of the accumulator (6) is exceeded, to reduce a power consumption of at least the first or second consumer (4, 5) to an amount not equal to zero, wherein the base device (2) has an accumulator management system which manages the powers that are taken from the accumulator (6), specifically assigns power as required to the first and second consumers (4, 5) and distributes the available maximum power output of the accumulator (6) to the first and second consumer (4, 5) such that the first or second consumer (4, 5) or the attachment device (3) and/or base device (2) is not switched off, wherein the floor treatment device (1) has a data memory (8) assigned to the control apparatus (7), in which memory a defined ranking of the first and second consumer (4, 5) is stored for the purpose of energy supply, wherein the control apparatus (7) is designed to reduce a power consumption of the first or second consumer (4, 5) defined as subordinate in the ranking when a particular comparison result is present and/or maintain or increase the power consumption of the first or second consumer (4, 5) defined as superior in the ranking.

2. Floor treatment device (1) according to claim 1, **characterised in that** the ranking of the first and second consumer (4, 5) is defined depending on an operating function performed by the floor treatment device (1) and/or a service requirement of a device component and/or a type of the attachment device (3) connected to the base device (2) and/or a type of floor surface to be treated by the floor treatment device (1).

3. Floor treatment device (1) according to claim 2, **characterised in that** the operating function is a start of the first or second consumer (4, 5), in particular an electric motor, or a floor treatment mode optimised for a particular floor treatment task of the floor treatment device (1), in particular a hard floor cleaning mode and/or carpet cleaning mode.

4. Floor treatment device (1) according to either claim 2 or claim 3, **characterised in that** the service requirement of the device component is a requirement for emptying a dust collection container (9) and/or a requirement for cleaning a dust filter and/or a requirement for charging the accumulator (6).

5. Floor treatment device (1) according to any of the preceding claims, **characterised in that** the control apparatus (7) is designed to supply the second consumer (5) with power in a time-delayed manner when a defined maximum power consumption of the first consumer (4) is detected or vice versa, and/or to increase the power consumption of the first or second consumer (4, 5) to an intended amount over a defined period.

6. Floor treatment device (1) according to any of the preceding claims, **characterised by** a selector switch (10) for a user to select an operating function of the floor treatment device (1), the control apparatus (7) being designed to control the power consumption of the first and second consumer (4, 5) depending on a setting of the selector switch (10).

7. Floor treatment device (1) according to claim 6, **characterised in that** the control apparatus (7) is designed to compare a selection of an operating function that is made by a user and/or a current power consumption that is set by the user with a power consumption of the first and second consumer (4, 5) that is defined as optimal for a current environmental condition of the floor treatment device (1), in particular to compare an actual power consumption of the first or second consumer (4, 5) with a defined target power consumption for treating the floor surface, and to set the defined target power consumption of the first or second consumer (4, 5) in the event of a deviation.

8. Floor treatment device (1) according to any of the preceding claims, **characterised by** a sensor system which has one or more sensors (11, 12, 13, 14) selected from the group: distance sensor for detecting a floor height of a suction mouth (15) of the attachment device (3) with respect to a surface to be cleaned, pressure sensor (11) for measuring a pressure within a suction channel (16) of the floor treatment device (1), sensor (12) for detecting an electronic or optical identification element (22) of the attachment device (3), pushing force sensor for measuring a pushing force occurring between the attachment device (3) and a floor surface to be cleaned, floor type sensor (13), in particular an optical sensor or ultrasonic sensor for detecting a light signal or ultrasonic signal scattered by a floor surface to be cleaned, or current sensor (14) for measuring a current consumption of the first or second consumer (4, 5).

9. Floor treatment device (1) according to claim 8, **characterised in that** the control apparatus (7) is designed to control a power consumption of the first and second consumer (4, 5) depending on a detection result of one or more sensors (11, 12, 13, 14).

## Revendications

1. Dispositif de traitement du sol (1) comprenant un dispositif de base (2) et un accessoire (3) qui peut être relié de manière amovible au dispositif de base (2), dans lequel le dispositif de base (2) comporte au moins un premier récepteur électrique (4) et l'accessoire (3) comporte au moins un deuxième récepteur électrique (5), dans lequel le dispositif de traitement du sol (1) comprend en outre un accumulateur (6) pour l'alimentation en énergie des récepteurs électriques (4, 5) et une électronique de protection qui définit une puissance de sortie maximale de l'accumulateur (6) déterminée par les limites de fonctionnement de l'accumulateur (6) laquelle entraînerait en cas de dépassement la mise hors service de l'accessoire (3) ou du dispositif de traitement du sol (1), dans lequel le dispositif de traitement du sol (1) comporte un dispositif de commande (7) pour déterminer et commander une puissance absorbée par le premier récepteur (4) du dispositif de base (2) qui est requise pour son fonctionnement actuel et une puissance absorbée par le deuxième récepteur (5) de l'accessoire (3) qui est requise pour son fonctionnement actuel, dans lequel le dispositif de commande (7) est agencé pour calculer une somme de puissances absorbées à partir des puissances absorbées actuellement requises par le premier récepteur (4) et par le deuxième récepteur (5), de comparer la somme de puissances absorbées avec la puissance de sortie maximale définie de l'accumulateur (6) et, si la puissance de sortie maximale de l'accumulateur (6) est dépassée, de réduire une puissance absorbée d'au moins le premier ou le deuxième récepteur (4, 5) à une valeur différente de zéro, dans lequel le dispositif de base (2) comporte un système de gestion de l'accumulateur qui gère les puissances tirées de l'accumulateur (6), c'est-à-dire qui attribue de la puissance aux premier et deuxième récepteurs (4, 5) en fonction des besoins et distribue la puissance de sortie maximale disponible de l'accumulateur (6) aux premier et deuxième récepteurs (4, 5) de manière à éviter un arrêt du premier ou du deuxième récepteur (4, 5) ou de l'accessoire (3) et/ou du dispositif de base (2), dans lequel le dispositif de traitement du sol (1) comporte une mémoire de données (8) associée au dispositif de commande (7) dans laquelle est mémorisé un ordre de priorité défini des premier et deuxième récepteurs (4, 5) à des fins d'alimentation en énergie, dans lequel le dispositif de commande (7) est agencé pour réduire la puissance absorbée du premier ou du deuxième récepteur (4, 5) qui est défini dans l'ordre de priorité comme ayant une priorité inférieure, lorsqu'un résultat déterminé de comparaison est présent et/ou pour maintenir ou augmenter la puissance absorbée du premier ou du deuxième récepteur (4, 5) défini dans l'ordre de priorité comme ayant une priorité supérieure.

2. Dispositif de traitement du sol (1) selon la revendication 1, **caractérisé en ce que** l'ordre de priorité des premier et deuxième récepteurs (4, 5) est défini en fonction d'une fonction de fonctionnement exécutée par le dispositif de traitement du sol (1) et/ou d'un besoin de service d'un composant du dispositif et/ou d'un type d'accessoire (3) relié au dispositif de base (2) et/ou d'un type de surface à traiter par le dispositif de traitement du sol (1).

3. Dispositif de traitement du sol (1) selon la revendication 2, **caractérisé en ce que** la fonction de service est un démarrage du premier ou du deuxième récepteur (4, 5), en particulier d'un moteur électrique, ou un mode de traitement du sol optimisé pour une tâche spécifique de traitement de sol du dispositif de traitement du sol (1), en particulier un mode de nettoyage de sol dur et/ou un mode de nettoyage de moquette.

4. Dispositif de traitement du sol (1) selon la revendication 2 ou 3, **caractérisé en ce que** le besoin de service du composant du dispositif est un besoin de vidage d'un récipient de collecte de poussière (9) et/ou un besoin de nettoyage d'un filtre à poussière et/ou un besoin de charge de l'accumulateur (6).

5. Dispositif de traitement du sol (1) selon l'une des revendications précédentes, **caractérisé en ce que** le dispositif de commande (7) est agencé pour alimenter le deuxième récepteur (5) en énergie avec un retard dans le temps lorsqu'est déterminée une puissance absorbée du premier récepteur (4) définie comme maximale ou vice versa, et/ou pour augmenter la puissance absorbée du premier ou du deuxième récepteur (4, 5) sur une période de temps définie jusqu'à une valeur prédéterminée.

6. Dispositif de traitement du sol (1) selon l'une des revendications précédentes, **caractérisé par** un sélecteur (10) pour la sélection d'une fonction de fonctionnement du dispositif de traitement du sol (1) par un utilisateur, le dispositif de commande (7) étant agencé pour commander la puissance absorbée des premier et deuxième récepteurs (4, 5) en fonction d'un réglage du sélecteur (10).

7. Dispositif de traitement du sol (1) selon la revendication 6, **caractérisé en ce que** le dispositif de commande (7) est agencé pour comparer une puissance absorbée actuelle réglée par une sélection de fonction de fonctionnement opérée par un utilisateur et/ou par l'utilisateur avec une puissance absorbée des premier et deuxième récepteurs (4, 5) définie comme étant optimale pour une condition environnementale actuelle du dispositif de traitement du sol (1), en particulier pour comparer une puissance absorbée réelle du premier ou deuxième récepteur (4, 5) avec une puissance absorbée cible définie pour le traitement de la surface de sol, et en cas d'écart, pour régler la puissance électrique cible définie du premier ou du deuxième récepteur (4, 5).

8. Dispositif de traitement du sol (1) selon l'une des revendications précédentes, **caractérisé par** un système de capteur(s) qui comporte un ou plusieurs capteurs (11, 12, 13, 14) choisis dans le groupe : capteur de distance pour détecter la hauteur du sol d'une bouche d'aspiration (15) de l'accessoire (3) par rapport à une surface à nettoyer, capteur de pression (11) pour mesurer une pression dans un canal d'aspiration (16) du dispositif de traitement du sol (1), capteur (12) pour détecter un élément d'identification électronique ou optique (22) de l'accessoire (3), capteur de force de poussée pour mesurer une force de poussée surgissant entre l'accessoire (3) et une surface de sol à nettoyer, capteur de type de sol (13) en particulier capteur optique ou capteur à ultrasons pour détecter un signal lumineux ou ultrasonore diffusé par une surface de sol à nettoyer, capteur de courant (14) pour mesurer un courant absorbé par le premier ou le deuxième récepteur (4, 5).

9. Dispositif de traitement du sol (1) selon la revendication 8, **caractérisé en ce que** le dispositif de commande (7) est agencé pour commander une puissance absorbée des premier et deuxième récepteurs (4, 5) en fonction d'un résultat de détection d'un ou plusieurs capteurs (11, 12, 13, 14).
